(19) Europäisches Patentamt / European Patent Office / Office européen des brevets

(11) **EP 1 646 967 B1**

(12) **FASCICULE DE BREVET EUROPEEN**

(45) Date de publication et mention de la délivrance du brevet:
**31.01.2007 Bulletin 2007/05**

(51) Int Cl.:
*G06K 9/64* *(2006.01)*      *G06K 9/32* *(2006.01)*

(21) Numéro de dépôt: **04766207.7**

(22) Date de dépôt: **13.07.2004**

(86) Numéro de dépôt international:
**PCT/EP2004/051476**

(87) Numéro de publication internationale:
**WO 2005/017818 (24.02.2005 Gazette 2005/08)**

(54) **PROCEDE DE MESURE DE PROXIMITE DE DEUX CONTOURS ET SYSTEME D'IDENTIFICATION AUTOMATIQUE DE CIBLES**

VERFAHREN ZUR MESSUNG DES NAHEVERHÄLTNISSES ZWEIER KONTUREN UND SYSTEM ZUR AUTOMATISCHEN ZIELIDENTIFIKATION

METHOD FOR MEASURING THE PROXIMITY OF TWO CONTOURS AND SYSTEM FOR AUTOMATIC TARGET IDENTIFICATION

(84) Etats contractants désignés:
**AT BE BG CH CY CZ DE DK EE ES FI FR GB GR HU IE IT LI LU MC NL PL PT RO SE SI SK TR**

(30) Priorité: **17.07.2003 FR 0308707**

(43) Date de publication de la demande:
**19.04.2006 Bulletin 2006/16**

(73) Titulaire: **Thales**
**92200 Neuilly Sur Seine (FR)**

(72) Inventeur: **RUCH, Olivier,**
**Thales Intellectual Property**
**F-94117 Arcueil Cedex (FR)**

(74) Mandataire: **Esselin, Sophie et al**
**Marks & Clerk France**
**31-33 Avenue Aristide Briand**
**94117 Arcueil Cedex (FR)**

(56) Documents cités:
- **DUBUISSON M-P ET AL: "A modified Hausdorff distance for object matching" PATTERN RECOGNITION, 1994. VOL. 1 - CONFERENCE A: COMPUTER VISION & IMAGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, 9 octobre 1994 (1994-10-09), pages 566-568, XP010216070 ISBN: 0-8186-6265-4**
- **TOET A ET AL: "Genetic contour matching" PATTERN RECOGNITION LETTERS, NORTH-HOLLAND PUBL. AMSTERDAM, NL, vol. 16, no. 8, 1 août 1995 (1995-08-01), pages 849-856, XP004062328 ISSN: 0167-8655**
- **HUTTENLOCHER D P ET AL: "Comparing images using the Hausdorff distance under translation" PROCEEDINGS OF THE COMPUTER SOCIETY CONFERENCE ON COMPUTER VISION AND PATTERN RECOGNITION. CHAMPAIGN, IL, JUNE 15 - 18, 1992, NEW YORK, IEEE, US, 15 juin 1992 (1992-06-15), pages 654-656, XP010029292 ISBN: 0-8186-2855-3**
- **GUPTA L ET AL: "Robust automatic target recognition using a localized boundary representation" PATTERN RECOGNITION, PERGAMON PRESS INC. ELMSFORD, N.Y, US, vol. 28, no. 10, 1 octobre 1995 (1995-10-01), pages 1587-1598, XP004002554 ISSN: 0031-3203**

**Description**

La présente invention concerne l'identification automatique des cibles présentes dans une image. Plus précisément cette invention décrit une méthode discriminante permettant de comparer des contours 2D. Elle s'applique principalement dans le domaine militaire, afin d'assister le pilote d'un avion en situation de combat dans ses choix de tirs. Elle présente également un intérêt dans tout autre domaine concerné par la reconnaissance de formes, notamment, le domaine de la surveillance et le domaine médical.

Un processus d'identification automatique doit permettre de déterminer de façon fiable combien de cibles se trouvent dans l'image, à quelles positions et de quels types elles sont.

On entend par cible, un objet 3D que l'on cherche à identifier. Dans le domaine militaire, ces cibles sont typiquement des chars, des véhicules terrestres .... Dans la suite, on parle indifféremment de cible ou d'objet.

Dans la présente demande, on entend par système d'identification, un système par lequel une cible dans une image est identifiée par son type: marque, nom ou numéro, ou bien par sa classe : voiture, char, car...

L'identification automatique d'objets ou de cibles, est un problème algorithmique complexe, en raison d'une part des ressemblances potentielles entre deux cibles différentes sous certains angles de vue, et d'autre part de la grande variabilité d'apparence d'une cible, due à des déformations géométriques, à la position de certains éléments, ou à la présence de certains équipements. Par exemple, un véhicule peut avoir des portes ouvertes ou fermées, des bagages sur le toit...

On cherche à identifier automatiquement de la façon la plus fiable possible des cibles dans une image. Le processus automatique d'identification doit ainsi présenter deux qualités essentielles : être robuste, c'est à dire peu sensible aux variations d'apparence d'une cible qui se traduisent par des perturbations locales sur l'objet dans l'image ; être discriminant, c'est à dire être capable de discerner entre deux cibles proches en apparence.

Dans l'invention, on s'intéresse plus particulièrement à un système d'identification automatique de cibles basé sur la comparaison de contours. Dans un tel système, on extrait, dans un premier temps, les contours présents dans l'image à analyser puis, dans un second temps, on compare ces contours à ceux d'une base de référence de cibles, contenant des données représentant les objets 3D que l'on cherche à identifier.

L'extraction des contours présents dans l'image se fait à l'aide d'une technique dite de segmentation. Le résultat est une image dite *de contours extraits,* correspondant à une image binaire ne laissant plus apparaître que des pixels de contours, représentés en général par des points blancs sur un fond noir. Dans cette image, seuls les pixels de contours contiennent de l'information. Dans la suite, sauf mention contraire explicite, on entend par point, un point porteur d'information, c'est à dire un point appartenant à un contour dans le modèle ou dans l'image. Les pixels qui ne sont pas des points de contour, ne sont pas porteurs d'information.

L'image de contours extraits est alors comparée aux contours obtenus d'une base de données représentant les objets 3D que l'on cherche à identifier. Ces contours sont dits *contours-modèles* et sont obtenus, pour chacun des objets 3D, par projection selon un ensemble de points de vue permettant de représenter toutes les apparences de l'objet. A chaque objet 3D dans la base, correspond ainsi une collection de contours-modèles de cet objet.

Dans l'invention, on s'intéresse plus particulièrement à une méthode de comparaison dite corrélative, qui consiste à comparer chaque contour modèle à l'image de contours extraits pour toutes les positions possibles de ce contour modèle dans l'image. Pour une position donnée, cette comparaison est effectuée en superposant le contour modèle à l'image, et consiste à mesurer " l'écart " entre les points du contour modèle et ceux de l'image de contours extraits. Chacun des contours-modèles étant repéré par rapport à une origine, il est possible de recalculer les coordonnées de chacun de ses points dans le système de coordonnées de l'image de contours, selon le pixel de l'image sur lequel on centre cette origine. On balaye ainsi chacun des contours-modèles sur l'ensemble de l'image de contours extraits.

Lorsque l'image de contours extraits a été balayée par l'ensemble des contours-modèles, le processus consiste à sélectionner l'hypothèse ou les hypothèses les plus vraisemblables.

On entend par hypothèse, une cible, une position de cette cible dans l'image et un point de vue sous lequel est observé cette cible.

Une méthode d'évaluation de l'écart entre les points de contours modèles et les points de contours extraits consiste à comptabiliser le nombre de points que ces contours ont en commun.

Cette méthode d'évaluation simple basée sur le nombre de points en commun avec un contour modèle est cependant peu robuste et peu discriminante. Peu robuste car elle est très sensible aux variations d'apparence de la cible et peu discriminante car elle prend en compte avec la même importance tous les points du contour.

Une autre méthode d'évaluation plus complexe utilise un procédé de mesure dit de Hausdorff. Ce procédé consiste à identifier pour chacun des points de contour modèle, la distance la plus faible de ce point aux points du contour image, et à en déduire un degré de dissimilarité entre le contour modèle et le contour image, sur la base de la moyenne des distances évaluées.

Cependant, ce procédé même s'il est plus performant que le précédent n'est pas suffisamment robuste ni discriminant, car il peut tenir compte de distances non pertinentes qui devraient être écartées. En effet, un même point de contour modèle peut être vu comme le plus proche de plusieurs points de contour image différents. C'est notamment le cas si l'image contient des points parasites qui ne correspondent pas à un contour d'une cible à identifier, par exemple, des points qui correspondent à des contours internes de la cible, ou des points qui correspondent à l'environnement de la cible (végétation, immeubles....). Ces points parasites vont perturber la mesure. La prise en compte de toutes ces distances peut ainsi conduire à une hypothèse fausse.

Un objet de l'invention est un processus d'identification automatique qui ne présente pas ces différents inconvénients.

Un processus d'identification automatique selon l'invention comprend un procédé de mesure de proximité d'un contour modèle à un contour image basé sur une étape d'appariement univoque de chaque point d'un contour modèle à zéro ou un unique point de contour image.

Ce procédé d'appariement point à point comprend une étape d'association à chaque point de contour image, du point de contour modèle le plus proche. A cette étape, on fait correspondre à chaque point de contour image, deux informations : les coordonnées d'un point de contour modèle déterminé comme le plus proche et la distance entre les deux points ainsi associés.

Puis, inversement, pour chaque point du contour modèle, on considère l'ensemble des points de contour image qui lui ont été associés dans l'étape précédente et dans cet ensemble, on détermine le point de contour image le plus proche, en prenant la distance la plus faible. On obtient un appariement univoque point à point. A la sortie, chaque point de contour modèle est apparié soit à zéro point de contour image soit à un unique point de contour image correspondant à une distance la plus faible.

En attribuant une note locale de proximité à chaque point de contour modèle, égale à zéro si il est apparié à zéro point de contour image, et si il est apparié à un point de contour image, égale à une valeur d'autant plus faible que la distance entre les deux points appariés est grande, on peut calculer une note globale, égale à la moyenne des notes locales qui exprime la probabilité de similarité du contour modèle au contour image.

La note globale qui résulte de cette méthode est beaucoup plus discriminante que la mesure de proximité utilisée dans les procédés d'identification automatique de l'état de la technique, notamment vis à vis des hypothèses fausses.

Un système d'identification automatique selon l'invention utilise ce procédé pour chaque position du contour modèle dans l'image, et pour chaque modèle d'une collection de modèles.

L'ensemble des notes globales obtenues, correspondant aux différents contours modèles et à leurs différentes positions dans l'image, permet d'élaborer un certain nombre d'hypothèses en retenant les meilleures notes globales de proximité.

Le processus d'appariement point à point selon l'invention permet d'améliorer la discrimination du système d'identification automatique vis à vis des hypothèses fausses correspondant à des cas où les contours dans l'image comprennent des points intérieurs de contours c'est à dire correspondant à des contours internes d'une cible, et des points extérieurs de contours, c'est à dire correspondant à l'environnement de la cible (végétation, immeubles....).

Selon un autre aspect de l'invention, pour améliorer la discrimination entre des hypothèses de cibles qui se superposent (c'est à dire à des positions identiques ou proches dans l'image, ce qui se définit habituellement par des points de contour en commun entre les deux hypothèses de contours modèles), le procédé de mesure de proximité applique une pondération locale en chaque point d'un contour modèle. Cette pondération est représentative d'une quantité d'information contenue en ce point et définie par rapport à l'autre contour modèle. Cette pondération permet de discriminer les silhouettes des deux cibles sur la base de leurs différences locales. Plus particulièrement, cette pondération consiste à appliquer le procédé de mesure de proximité entre les deux contours modèles à discriminer, pour obtenir, pour chaque contour modèle, un facteur de pondération en chaque point qui permet de donner plus de poids aux points de contour modèle qui contiennent les informations différences avec l'autre contour modèle. Lorsque la collection d'hypothèses contient plus de deux hypothèses superposables, on applique ce processus de pondération deux à deux, et on retient la meilleure note globale obtenue à chaque fois.

Le système d'identification automatique selon l'invention applique à chacun des contours modèle d'une collection, le processus de mesure de proximité de ce contour modèle au contour image à analyser pour évaluer la vraisemblance de ce modèle, et entre les contours modèles pris deux à deux dans une sélection d'hypothèses qui se superposent, pour discriminer entre deux contours modèles proches en pondérant localement cette probabilité relativement à chacun des deux modèles.

Ainsi, telle que caractérisée, l'invention concerne un procédé de mesure de proximité d'un deuxième contour à un premier contour, comprenant pour chaque point du premier contour, une étape d'association avec un point du deuxième contour déterminé comme le plus proche, caractérisé en ce qu'il comprend une étape d'appariement de chaque point du deuxième contour avec un ou zéro point du premier contour, par détermination du point du premier contour le plus proche parmi l'ensemble des points du premier contour associés au dit point du deuxième contour.

L'invention concerne aussi un procédé d'identification automatique de cibles, qui utilise un tel procédé de mesure de proximité d'un contour modèle à un contour image.

Selon un perfectionnement, ce procédé d'identification utilise ce procédé de mesure de proximité d'un contour modèle à un autre contour modèle, pour permettre la discrimination entre deux hypothèses qui se superposent.

D'autres avantages et caractéristiques de l'invention apparaîtront plus clairement à la lecture de la description qui suit, faite à titre indicatif et non limitatif de l'invention et en référence aux dessins annexés, dans lesquels :

- la figure 1 représente une image de contours extraite d'une image d'entrée appliquée à un système d'identification automatique de contours;
- la figure 2 illustre l'étape d'association d'un point de l'image à un point de contour modèle selon un procédé de mesure de proximité d'un contour modèle au contour image à analyser selon l'invention;
- la figure 3 illustre l'étape d'appariement point à point selon un procédé de mesure de proximité d'un contour modèle au contour image à analyser selon l'invention ;
- les figures 4a et 4b illustrent un problème de détection d'hypothèses fausses ;
- les figures 5a et 5b illustrent les classes d'orientation associées aux points de contour image et modèle ;
- la figure 6 représente la courbe associée à un exemple de fonction d'attribution d'une note locale de proximité selon l'invention ;
- les figures 7a à 7d illustrent le principe de pondération de la note locale de pondération selon l'invention.

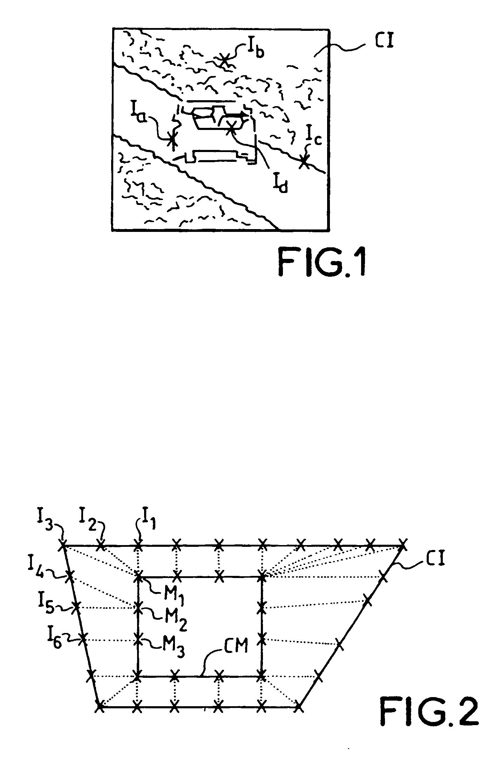

La figure 1 représente une image de contours extraits d'une image de donnée, qui peut-être issue d'une caméra infrarouge, d'un système vidéo, ou de toute autre source d'images.

On veut déterminer dans cette image de contours extraits, combien de cibles elle contient, à quelles positions et de quels types, parmi un ensemble de cibles identifiées, que l'on a sous forme d'objets 3D dans une base de données. Pour cela, on construit un ensemble de contours modèles 2D correspondant à des projections de chacun des objets 3D, selon différents angles de vue, en tenant compte des informations sur les conditions sous lesquelles les cibles sont observées, comme par exemple, des informations de distance entre la cible et le capteur, d'angle de visée...

Considérons un contour modèle positionné d'une façon quelconque dans l'image de contours extraits, et noté CM. On appelle dans la suite contour image CI, l'ensemble des points de contours de l'image de contours extraits. On applique un procédé de mesure de proximité selon l'invention, pour mesurer la proximité de ce contour CM au contour image à analyser.

La figure 1 illustre une image de contours extraits d'une image obtenue de façon quelconque: image infrarouge, image active. Elle contient des points de contour image, qui correspondent aux pixels noirs sur cette image, tels que les points référencés $I_a$, $I_b$, $I_c$, $I_d$ sur la figure 1. Ces points de contours peuvent être des points de contour d'une cible à identifier, tel le point $I_a$, des points externes au contour de la cible à identifier, tels les points $I_b$ et $I_c$ ou encore des points d'un contour interne à la cible à identifier, tel le point $I_d$.

Le procédé de mesure de proximité selon l'invention comprend une étape d'appariement univoque de chacun des points de contour modèle à zéro ou un seul point de contour image et une étape d'attribution d'une note locale de proximité à chaque point de contour modèle, représentant la proximité de ce point de contour modèle avec le contour image.

Plus précisément, l'étape d'appariement de chacun des points du contour modèle comprend les étapes a)- et b)- suivantes :

a)-une étape d'association à chaque point de contour image d'un point de contour modèle, sur le critère de la distance la plus faible ;

b)-pour chaque point de contour modèle, la détermination de l'ensemble des points de contour image auxquels il a été associé à l'étape a)-, et la détermination du point image le plus proche dans cet ensemble, sur le critère de la distance la plus faible.

Ce procédé entraîne qu'à l'étape a)- on mémorise pour chaque point de contour image deux informations : les coordonnées du point de contour modèle associé et la distance correspondante entre les deux points associés, pour effectuer l'étape b)- d'appariement sur la base de ces deux informations.

La distance considérée est la distance euclidienne, dont on effectue une mesure vraie ou une mesure discrète selon les méthodes de calcul utilisées. Notamment, l'utilisation d'une méthode de chanfrein, permettant de manière connue d'accélérer le temps de calcul utilise une mesure discrète de la distance euclidienne.

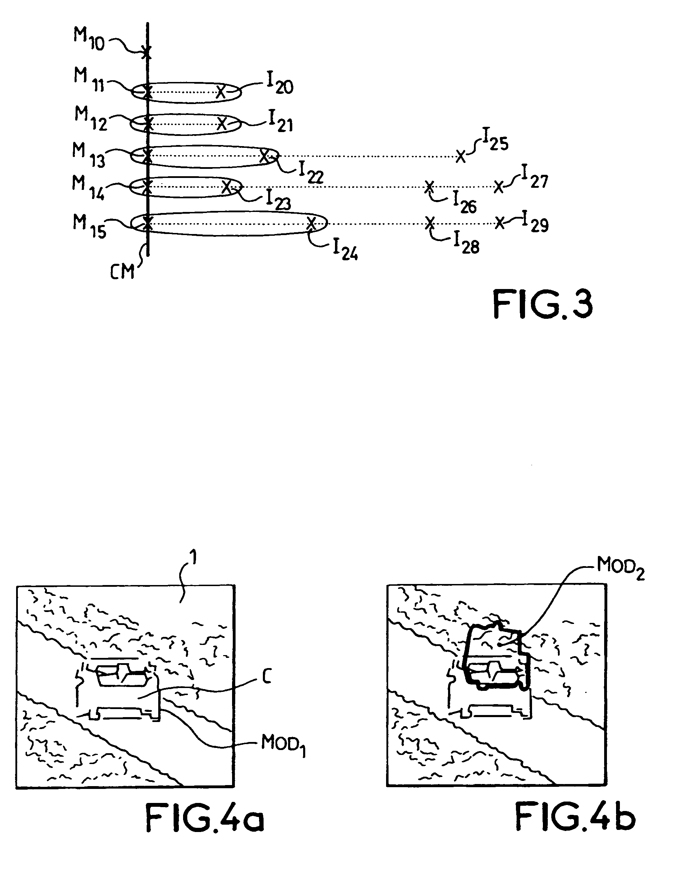

Les étapes a)- et b)- sont illustrées sur les figures 2 et 3.

L'étape a)-. est illustrée sur la figure 2. On évalue la proximité des points de contour image CI avec le contour modèle CM, pour associer à chaque point de contour image un point de contour modèle le plus proche. Ainsi, comme représenté sur la figure 2, si on prend un point du contour image CI, l'évaluation du point de contour modèle le plus proche consiste à rechercher la distance d la plus faible entre ce point de contour image et un point de contour modèle.

Dans l'exemple représenté sur la figure 2, cette évaluation conduit à associer le point $M_1$ de contour modèle CM au point $I_1$ du contour image CI. Dans cet exemple, on a aussi les associations suivantes : $(I_1, M_1)$, $(I_2, M_1)$, $(I_3, M_1)$, $(I_4, M_2)$, $(I_5, M_2)$, $(I_6, M_3)$.

Au cours de cette étape, un même point de contour modèle peut être associé à des points différents de contour image. Dans l'exemple, le point $M_1$ du contour modèle CM a été associé aux points $I_1$, $I_2$, $I_3$ de contour image.

L'étape b)- est illustrée sur la figure 3. Elle consiste pour chaque point de contour modèle, à sélectionner parmi les points de contour image qui lui ont été associés dans la première étape a), le point de contour image le plus proche du point de contour modèle. Sur la figure 3, on a représenté par des lignes pointillées la mise en correspondance de points de contour image avec des points de contour modèle selon la première étape a). Pour chaque point de contour modèle, on a ainsi 0, un ou n points de contour image associés selon cette étape a). Par exemple, pour le point de contour image $M_{15}$, on a 3 points de contour image associés : $I_{24}$, $I_{28}$, et $I_{29}$.

L'étape b)- consiste à ne garder que le point image le plus proche, quand il existe, parmi les points de contour image associés à un même point de contour modèle et à évaluer la note locale de proximité de ce point de contour modèle au contour image sur la base de l'appariement (point de contour modèle -point de contour image) ainsi effectué.

Dans l'exemple de la figure 3, l'appariement point $M_i$ (modèle) à point $I_k$ (image) selon l'invention est le suivant : $(M_{10}$, zéro point image); $(M_{11}, I_{20})$; $(M_{12}, I_{12})$; $(M_{13}, I_{22})$; $(M_{15}, I_{24})$.

Avec un appariement point à point selon l'invention, les points de contour images $I_{25}$ à $I_{29}$ ne seront donc pas pris en compte dans l'évaluation de la proximité du modèle.

L'étape d'appariement point à point selon l'invention fournit pour chaque point $M_i$ de contour modèle $M_i$ apparié à un unique point de contour image $I_k$, une mesure de proximité de ce point $M_i$ au contour image. Cette mesure de proximité du point $M_i$ peut s'écrire :

$Dist(M_i) = d(M_i, I_k)$, où $d(M_i, I_k)$ est une mesure vraie ou approchée de la distance euclidienne entre les deux points appariés. Elle s'exprime en nombre de pixels.

Le procédé comprend en outre une étape d'attribution d'une note locale de proximité à chacun des points du contour modèle de la façon suivante : la note prend une valeur comprise entre 0 et 1, d'autant plus grande que les points appariés sont proches (que la mesure de proximité de ce point est faible). Plus précisément :

- si un point de contour modèle n'est atteint par aucun point de contour image, correspondant à un point de contour modèle très éloigné du contour image, on lui attribue la note zéro. Dans l'exemple de la figure 3, la note attribuée au point $M_{10}$ est zéro : $N(M_{10}) = 0$.
- si un point de contour modèle est atteint par un point de contour image, unique, on lui affecte une note d'autant plus grande que les points sont proches. Par exemple, on pourrait avoir $N(M_{12}) = 0,7$ ; $N(M_{15}) = 0,3$.

La dernière étape du procédé consiste alors à déterminer la note globale pour le modèle, en moyennant les notes locales de tous les points du contour modèle.

Selon ce principe d'évaluation, le contour modèle est évalué comme étant d'autant plus proche d'un contour image que la note globale qui lui est attribuée est élevée.

On a pu montrer qu'un tel processus d'identification automatique de cibles selon l'invention permet d'éviter des erreurs de détection du type illustré sur les figures 4a et 4b. Sur ces figures, on a superposé sur une image 1 comprenant une cible C, un premier modèle $MOD_1$ (figure 4a) et un deuxième modèle $MOD_2$ (figure 4b). Le premier modèle $MOD_1$ correspond dans l'exemple à la cible à détecter sur laquelle il est parfaitement positionné. Il conduit à une hypothèse retenue. Le deuxième modèle correspond à un autre type de cible. Mais avec un procédé selon l'état de la technique, l'hypothèse sera retenue, du fait de la présence de points de contours n'appartenant pas au contour de la cible, mais appartenant en réalité au fond, ou à des points de contours internes.

Selon un mode de réalisation de l'invention, l'évaluation de la note locale de proximité de chaque point de contour modèle est une fonction de la distance d entre ce point et le point de contour image apparié selon l'invention.

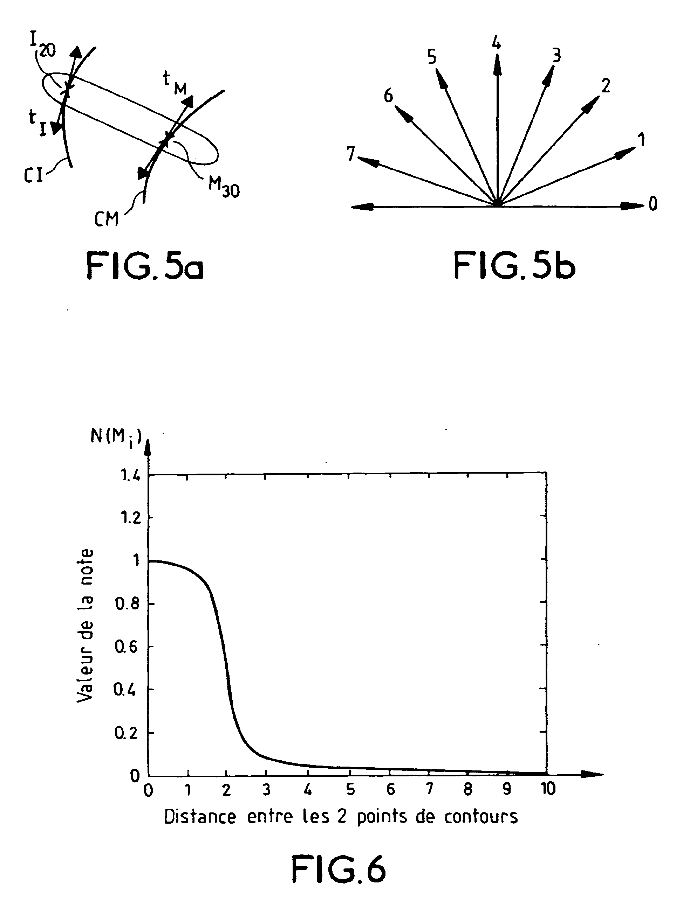

De préférence, et comme représenté schématiquement sur les figures 5a et 5b, l'évaluation de la proximité de deux points comprend la prise en compte de la classe d'orientation aux points $I_{20}$ et $M_{30}$ de la paire P considérée. Cette classe est typiquement définie par l'orientation de la tangente du contour au point considéré : sur la figure 5a, on a représenté la tangente $t_I$ au point de contour image $I_{20}$ du contour image CI et la tangente $t_M$ au point de contour modèle $M_{30}$ du contour modèle CM. On définit n classes d'orientation, avec n entier : la classe d'orientation 0 correspond à une orientation horizontale de la tangente ; la classe d'orientation n-1 correspond à une orientation verticale de la tangente et chacune des classes d'orientation intermédiaires correspond à une orientation de la tangente déterminée, comprise entre 0 et $\pi$ rad. Ces classes sont représentées sur la figure 5b avec n=8. Dans cet exemple, le point $I_{20}$ appartient à la classe d'orientation 6 et le point $M_{30}$ appartient à la classe d'orientation 5.

De façon générale, si les tangentes $t_I$ et $t_M$ coïncident, c'est à dire si les deux points appariés appartiennent à la même classe d'orientation, alors $\Delta ORI = 0$. Si les deux points appariés sont dans des classes orthogonales, $\Delta ORI = n-1$. Plus généralement, on a $AORI = |classe(I_k) - classe\#(M_i)|$ (en nombre de pixels).

Dans l'exemple représenté sur la figure 5a, $\Delta$ORI =6-5=1

La mesure corrigée de proximité au contour image du point de contour modèle $M_i$ apparié au point de contour image $I_k$ peut ainsi s'écrire :

$$\text{Dist}(M_i)= d(M_i, I_k) + \frac{1}{4}\,\Delta ORI.$$

En pratique, avec n=8 classes, on obtient un bon compromis en termes de fausses détections et de temps de calcul.

Dans ce perfectionnement, la mesure de proximité est une fonction continue de la position et de l'orientation. On limite ainsi le poids de l'orientation, qui peut être estimée de façon erronée.

Dans une variante de prise en compte de la classe d'orientation, on tient compte de la classe d'orientation dans l'étape d'association du processus d'appariement point à point, en ne permettant l'association (et donc l'appariement) qu'entre points de même classe. Dans ce cas, la mesure de proximité $\text{Dist}(M_i)$ est égale à la distance entre les deux points appariés $M_i$ et $I_k$.

L'attribution de la note locale de proximité $N(M_i)$ d'un point de contour modèle $M_i$ en fonction de la mesure de proximité selon l'invention doit contribuer à la robustesse du procédé d'identification .

Cette note locale traduit une probabilité de similarité entre le contour modèle et le contour image : elle prend une valeur sur l'intervalle [0,1]. Quand elle est égale à zéro, elle traduit que le point de contour modèle ne "matche pas" avec le contour image; quand elle est égale à 1, elle traduit une forte probabilité que le contour modèle corresponde au contour image.

Ainsi, tous les points de contour modèle qui n'ont pu être appariés avec un point de contour image selon le procédé de l'invention doivent avoir une contribution nulle, c'est à dire une note nulle, traduisant leur grand éloignement du contour image.

Pour les points de contour modèle qui sont appariés à un point, unique, de contour image, la fonction d'attribution de la note suit de préférence les critères suivants :

- la note doit prendre une valeur égale à 1, lorsque la mesure de proximité $\text{Dist}(M_i)$ est nulle ;
- la note doit prendre une valeur voisine de 1 lorsque la mesure de proximité $\text{Dist}(M_i)$ est comprise entre 0 et 1.
- la note doit décroître très rapidement vers 0 dès que la mesure de proximité $\text{Dist}(M_i)$ devient supérieure à 1.
- la courbe d'attribution de la note $N(M_i)$ possède un point d'inflexion, de préférence pour une mesure de proximité $\text{Dist}(M_i)$ voisine de 2 pixels.
- la note doit prendre une valeur quasi-nulle dès que la mesure de proximité $\text{Dist}(M_i)$ devient supérieure à 3 pixels.

La fonction $N(M_i)$ d'attribution de la note à un point de contour modèle $M_i$ apparié selon l'invention au point de contour image $I_k$ aura par exemple la forme représentée sur la figure 6, qui correspond à la fonction suivante :

$$N(M_i)=\left( 0{,}5-\arctan\frac{4(Dist(M_i)-2)}{\pi} \right)\frac{1}{0{,}9604}.$$

Une mise en oeuvre pratique d'un procédé de mesure de proximité selon l'invention peut utiliser des méthodes de calcul dites de chanfrein. Ces méthodes de chanfrein sont très efficaces en termes de temps de calcul et sont très utilisées dans de nombreux domaines de traitement d'image dont celui de la reconnaissance de forme.

Une méthode de chanfrein classique permet de faire correspondre à un contour, une carte à deux entrées x et y correspondant aux coordonnées d'un point donné, et à une sortie, qui est la distance la plus faible de ce point(x,y) au contour. En d'autres termes, on évalue la distance la plus faible du point (x,y) au contour cartographié au moyen de courbes de niveaux. Cette méthode connue de chanfrein est généralement utilisée pour appliquer le procédé de mesure de Hausdorff. Dans ce cas, la méthode de chanfrein est appliquée sur le contour image, permettant de déterminer pour chaque point (x,y) de contour modèle, la distance la plus faible au contour image.

Dans le procédé selon l'invention, la méthode de chanfrein doit être appliquée de façon différente.

Tout d'abord, dans la première étape d'association du procédé selon l'invention, on cherche à mesurer la distance la plus faible d'un point de contour image au contour modèle. Ceci implique d'appliquer la méthode de chanfrein non plus au contour image, mais à chacun des contours modèles.

Cependant, le calcul de la carte de chanfrein d'un contour modèle est indépendant de l'image de contours extraits à analyser. Ces calculs peuvent donc être effectués une fois pour toutes et mémorisés, pour être exploités le moment venu, en temps réel, pour l'analyse d'une image de contours donnée.

Ensuite, pour permettre l'appariement point à point selon l'invention, la carte de chanfrein du contour modèle doit fournir en sortie une première information qui est la distance entre les deux points associés, et une deuxième information qui est l'identification du point de contour modèle associé à cette distance. Cette deuxième information est nécessaire car c'est elle qui va permettre dans l'étape d'appariement, de déterminer l'ensemble des points de contour image associés à un même point de contour modèle, et d'en déduire automatiquement la mesure de proximité par la première information associée.

Ainsi, un procédé de calcul rapide selon l'invention comprend le calcul d'une carte de chanfrein pour chaque contour modèle, ladite carte donnant en fonction des deux entrées x et y correspondant aux coordonnées d'un point de contour image, une information $S_0(x,y)$ identifiant le point de contour modèle atteint par la mesure de distance la plus faible, et une information $S_1(x,y)$ correspondant à la valeur de cette mesure.

Ensuite, on applique les étapes d'appariement point à point, et d'attribution d'une note locale à chaque point de contour modèle, fonction de la mesure de proximité $Dist(M_i)$ pour les points appariés.

Cette méthode ne permet pas de corriger la mesure de proximité $Dist(M_i)$ d'un point de contour modèle $M_i$ en fonction de la classe d'orientation de ce point et du point de contour image apparié $I_k$.

On prévoit alors de calculer une carte de chanfrein par classe d'orientation du contour modèle. On a donc n cartes de chanfrein par contour modèle. On a vu que de préférence, n=8.

L'étape d'association à chaque point de contour image d'un point de contour modèle comprend alors, pour chaque point de contour image, la détermination préalable de la classe d'orientation de ce point, et la sélection de la carte de chanfrein du contour modèle dans la classe d'orientation correspondante.

Enfin, le calcul de la note globale η consiste à effectuer la moyenne de toutes les notes locales, soit, si le contour modèle comprend l points $M_{i=1\ à\ l}$ de contour modèle, $\eta = \dfrac{1}{l}\sum\limits_{i=1}^{l} N(M_i)$.

Le procédé selon l'invention est appliqué sur tous les contours modèles en les balayant à chaque fois sur toute l'image.

On obtient une note globale pour chaque contour modèle (contour modèle à comprendre comme contour modèle dans une position donnée), qui est une mesure de probabilité de similitude de ce contour modèle au contour image.

Par exemple, on obtient la note globale $\eta_1$ pour le contour modèle $CM_1$; $\eta_2$ pour le contour modèle $CM_2$, ...

De préférence, on établit alors une sélection d'hypothèses. On entend par hypothèse, un contour modèle (c'est à dire une cible, sous un certain point de vue) dans une position déterminée dans l'image.

La sélection est typiquement obtenue en retenant les hypothèses les plus probables correspondant à une note globale obtenue supérieure à un seuil de décision. Ce seuil est de préférence fixé à 0,6.

La mise en oeuvre d'un tel processus d'identification automatique de cibles utilisant un procédé de mesure de proximité selon l'invention, permet de diminuer le nombre de fausses alarmes et de mieux discriminer entre les différentes hypothèses. En d'autres termes, on a moins d'hypothèses retenues en sortie.

Le tableau ci-dessus montre à titre de comparaison, pour des images différentes ne contenant qu'une cible à identifier, le nombre d'hypothèses retenues sur le critère de la mesure de Hausdorff (hypothèse retenue si mesure de Hausdorff<2pixels) et sur le critère de la note globale de proximité (η>0,6) selon l'invention. On voit que le critère de sélection basé sur la note de proximité selon l'invention donne de bien meilleurs résultats en terme de rejet de fausses hypothèses.

|  | Image 1 | Image 2 | Image 3 | Image 4 | Image 5 | Image 6 | Image 7 | Image 8 |
|---|---|---|---|---|---|---|---|---|
| Hausdorff | 4 | 5 | 3 | 2 | 3 | 7 | 2 | 8 |
| Note globale η | 3 | 2 | 0 | 2 | 3 | 2 | 0 | 4 |

Par contre, il ne permet pas d'améliorer de façon vraiment déterminante la discrimination entre deux cibles de silhouettes proches. Cela se traduit par la présence d'hypothèses superposables dans la sélection d'hypothèses obtenue. La notion d'hypothèses qui se superposent est une notion bien connue de l'homme du métier. Elle traduit que les contours modèles de ces hypothèses ont des points de contour en commun.

Un autre aspect de l'invention permet d'améliorer ce dernier point.

Le problème plus particulièrement considéré ici est dû au fait, que selon certains angles de vue, pour certaines orientations, deux cibles peuvent avoir des silhouettes relativement semblables, proches, au sens de la note globale η attribuée selon l'invention.

Néanmoins, on peut remarquer en pratique la présence de différences localisées. S'agissant de véhicules militaires par exemple, ce peut-être la présence de chenilles ou de roues; une longueur sensiblement différente; une forme arrondie ou au contraire anguleuse...

Certaines parties d'un contour modèle sont donc plus informatives que d'autres relativement à un autre contour modèle.

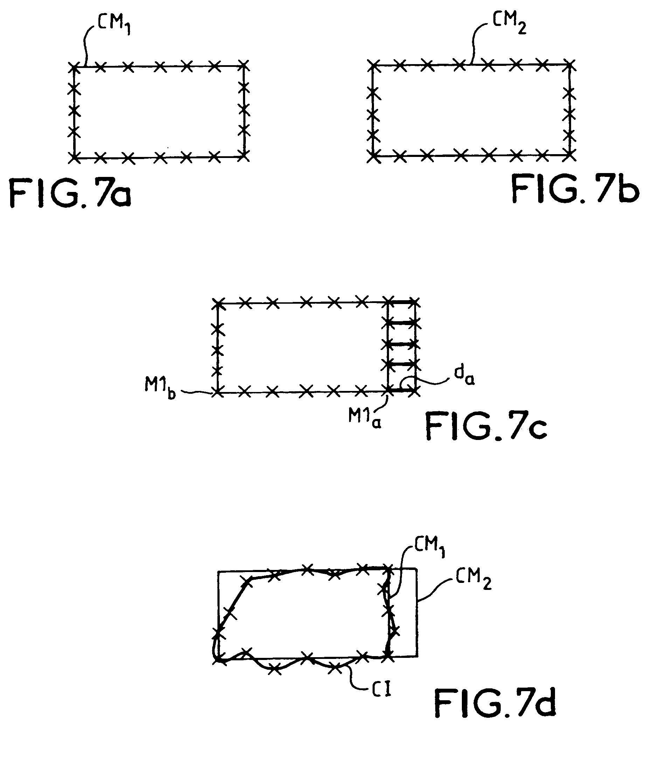

La figure 7d montre ainsi un contour image CI correspondant à une image de contours extraits. Deux modèles $CM_1$ et $CM_2$ représentés respectivement sur la figure 7a et la figure 7b, sont trouvés proches au sens de l'invention de ce contour image.

L'idée à la base du perfectionnement selon l'invention consiste à considérer les deux hypothèses qui se superposent, et à pondérer la note locale de chaque point d'un contour modèle, établie dans la mesure de proximité de ce contour modèle au contour image, par une quantité d'information représentant la différence locale en ce point, avec l'autre contour modèle.

Selon l'invention, la note globale $\eta_1$ associée du contour modèle $CM_1$ qui mesure la probabilité de similitude de ce contour modèle $CM_1$ au contour image CI est obtenue par pondération de chacune des notes locales. Plus précisément, on pondère la note locale de proximité $N(M1_i)$ de chaque point $M1_i$ du contour modèle CM1, par un facteur représentatif en ce point de la quantité d'information discriminante qu'il contient par rapport à l'autre contour modèle $CM_2$. Cette quantité d'information contenue en un point $M1_i$ du contour modèle $CM_1$ doit être d'autant plus élevée que ce point est éloigné de l'autre contour modèle $CM_2$ : c'est la définition même de la mesure de proximité en ce point Dist $(M1_i)$ selon le procédé de l'invention.

La quantité d'information de chacun des points $M1_i$ du premier contour $CM_1$ relativement au contour $CM_2$ est donc définit comme suit :

$$X(M1_i)= Dist(M1_i) =d(M1_i,M2_j).$$

où $M2_j$ est un point du contour modèle $CM2_j$ apparié au point $M1_i$ selon le procédé de mesure de proximité de l'invention. En un point donné du contour modèle $CM_1$, plus la distance au point apparié est grande, plus la quantité d'information en ce point est importante. C'est ce que représente schématiquement la figure 7c. Au point $M1_a$, la quantité d'information $X(M1_a)$ est grande, correspondant à la distance $d_a$ sur la figure.

Au point $M1_b$, la quantité d'information $X(M1_b)$ est nulle, puisqu'en ce point, les deux contours se confondent.

Les méthodes de calcul de chanfrein et de prise en compte de l'orientation des points dans la mesure de distance décrites précédemment s'appliquent de la même manière à ce calcul de quantité d'information.

Le procédé de pondération selon l'invention consiste alors, dans l'étape de calcul de la note globale $\eta_1$ du contour $CM_1$ au contour image, à pondérer la note locale de proximité de chaque point $M1_i$ du contour modèle $CM_1$ par la quantité d'information $X(M1_i)$ associée, soit:

$$\eta_1 = \frac{1}{m}\sum_{i=1}^{m} N(M1_i).X(M1_i).$$

On applique le procédé de pondération au points du deuxième contour $CM_2$, en inversant le rôle des premier et deuxième contours, c'est à dire en utilisant le procédé de mesure de proximité du deuxième contour $CM_2$ au premier contour $CM_1$ : on obtient la quantité d'information $X(M2_j)$ de chaque point $M2_j$ du deuxième contour $CM_2$ relativement au premier contour $CM_1$. On pondère la note locale de proximité $N(M2_j)$ de chaque point $M2_j$ par la quantité d'information $X(M2_j)$ associée. La note globale $\eta_2$ est obtenue en moyennant la note locale de proximité pondérée de chacun des points du contour modèle $CM_2$, soit

$$\eta_2 = \frac{1}{l}\sum_{j=1}^{l} N(M2_j).X(M2_j).$$

Ainsi, on donne plus de poids aux parties du contour de modèle qui ont le plus d'information par rapport aux autres.

En d'autres termes, cela revient à discriminer entre les deux hypothèses sur la base des points de contour qui contiennent le plus d'information par rapport à l'autre.

Cette notion de quantité d'information se définit donc par rapport à un couple de contours modèles donné.

Lorsque plus de deux hypothèses se superposent, on applique le procédé de discrimination deux à deux.

Ainsi l'invention décrit un procédé de mesure de proximité d'un deuxième contour à un premier contour, selon lequel chaque point $M_i$ du deuxième contour est apparié avec un ou zéro point du premier contour, donnant une mesure de proximité Dist($M_i$) en ce point.

Un procédé d'identification automatique de cibles selon l'invention applique ce processus de mesure de proximité pour déterminer la mesure de proximité de chaque point d'un contour modèle, appliqué comme deuxième contour, à un contour image, appliqué comme premier contour. Il en déduit pour chaque point du contour modèle, une note locale de proximité et pour le contour modèle, une note globale, donnant une mesure de probabilité de similitude au contour image.

Le procédé d'identification automatique détermine ainsi la note globale associée à chacun des contours modèles d'une collection (avec autant de contours modèles différents que de modèles 3D différents et que de points de vue considérés pour chaque modèle 3D).

Selon un autre aspect de l'invention, Il applique un critère de sélection d'hypothèses, en retenant comme hypothèse probable, chacun des contours modèles dont la note globale est supérieure au seuil.

Selon une variante, les contours modèles de la collection correspondent à une sélection d'hypothèses, issue d'un autre processus, par exemple, issue d'une mesure de Hausdorff.

Selon un autre aspect de l'invention, le procédé d'identification automatique applique alors le procédé de pondération à chaque couple d'hypothèses qui se superposent parmi les hypothèses retenues, pour obtenir pour le contour modèle associé à chaque hypothèse, une note globale pondérée selon l'invention. Pour cela, il utilise le procédé de mesure de proximité, en l'appliquant une première fois, pour mesurer la quantité d'information associée à chaque point du contour de la première hypothèse, appliqué comme deuxième contour, relativement au contour de la deuxième hypothèse appliqué comme premier contour, et calculer la note globale associée en moyennant les notes locales pondérées. Il applique le procédé de mesure de proximité une deuxième fois pour mesurer la quantité d'information associée à chaque point du contour de la deuxième hypothèse appliqué comme deuxième contour, relativement au contour de la première hypothèse appliqué comme premier contour, et calculer la note globale associée en moyennant les notes locales pondérées. Puis le système d'identification sélectionne la meilleure hypothèse. Si les hypothèses qui se superposent sont en nombre supérieur à deux, le système d'identification automatique applique cette pondération deux à deux, pour retenir à chaque fois la meilleure hypothèse.

On a pu tester sur station de travail les performances d'un système d'identification automatique de cibles utilisant un tel procédé d'identification selon l'invention, sur une base contenant 200 images à analyser et 9 cibles 3D correspondant à des véhicules terrestres. On a pu ainsi mettre en évidence une amélioration significative des performances de l'identification, avec un taux de bonne identification de 80%, contre 50% obtenus avec des procédés de l'état de la technique.

On notera que l'application d'un système d'identification automatique selon l'invention à une première sélection d'hypothèses obtenue d'un autre processus d'identification automatique, tel qu'un processus utilisant la mesure de Hausdorff, ne change pas les performances d'identification, mais permet avantageusement de gagner du temps de calcul.

L'invention qui vient d'être décrite permet d'améliorer de façon sensible la robustesse et la discrimination d'un système d'identification automatique qui la met en oeuvre. Elle s'applique au domaine militaire, mais plus généralement, à tout domaine utilisant la reconnaissance de forme par comparaison à une série de modèles.

## Revendications

**1.** Procédé automatisé de mesure de proximité d'un deuxième contour (CM) extrait d'une image à un premier contour (CI), comprenant pour chaque point ($I_k$) du premier contour, une étape d'association avec un point ($M_i$) du deuxième contour déterminé comme le plus proche, **caractérisé en ce qu'**il comprend une étape d'appariement de chaque point du deuxième contour avec un ou zéro point du premier contour, par détermination du point du premier contour le plus proche parmi l'ensemble des points du premier contour associés au dit point du deuxième contour.

**2.** Procédé selon la revendication 1, **caractérisé en ce que** la détermination d'un point le plus proche d'un point donné est basée sur une mesure vraie ou discrète de la distance euclidienne entre les deux points.

**3.** Procédé selon la revendication 2, **caractérisé en ce qu'**il comprend une étape d'attribution d'une mesure de proximité Dist($M_i$) de chaque point $M_i$ du deuxième contour (CM) au premier contour (CI), basée sur la mesure de la distance de ce point au point du premier contour avec lequel il est apparié.

**4.** Procédé selon la revendication 3, **caractérisé en ce que** ladite mesure de distance est une mesure corrigée en fonction de la différence de classe d'orientation des points de la paire considérée.

5. Procédé selon l'une quelconque des revendications 1 à 3, **caractérisé en ce que** dans l'étape d'association à chaque point du premier contour de zéro ou un point du deuxième contour, on associe le point le plus proche parmi les points du deuxième contour qui ont la même classe d'orientation que ledit point du premier contour.

6. Procédé selon l'une quelconque des revendications 1, 2, 3, ou 5, **caractérisé en ce que** l'étape d'association utilise une carte de chanfrein du deuxième contour par laquelle, à chaque point du premier contour de coordonnées x et y appliquées en entrée, ladite carte fournit en sortie une identification ($S_0(x,y)$) du point du deuxième contour associé et une mesure ($S_1(x,y)$) de la proximité entre les deux points ainsi associés.

7. Procédé selon la revendication 6 en combinaison avec la revendication 5, **caractérisé en ce qu'**au deuxième contour est associé une carte de chanfrein par classe d'orientation, et **en ce que** pour chaque point du premier contour, l'étape d'association comprend une étape de détermination de la classe du point du premier contour, pour appliquer les coordonnées (x,y) de ce point en entrées de la carte de chanfrein correspondant à la dite classe d'orientation.

8. Procédé selon l'une quelconque des revendications 4 à 7, **caractérisé en ce qu'**il utilise huit classes d'orientation.

9. Procédé d'identification automatique de cibles dans une image de contours extraits (CI) définie par un contour image, **caractérisé en ce qu'**il applique un procédé de mesure de proximité selon l'une quelconque des revendications 1 à 8, en appliquant comme deuxième contour, un contour modèle (CM) et comme premier contour, ledit contour image (CI), pour obtenir la mesure de proximité Dist($M_i$) de chaque point dudit contour modèle au dit contour image.

10. Procédé d'identification selon la revendication 9, **caractérisé en ce qu'**il comprend l'attribution d'une note locale de proximité N($M_i$) à chaque point $M_i$ du contour modèle en fonction de la mesure de proximité Dist($M_i$) de ce point, selon les critères suivants :

- N($M_i$) a une valeur comprise entre 0 et 1.
- N($M_i$) =0, lorsque ledit point est apparié à zéro point du premier contour;
- N($M_i$) = 1, lorsque la mesure de proximité est égale à zéro ;
- N($M_i$) a une valeur voisine de 1, lorsque la mesure de proximité est comprise entre 0 et 1 pixel.
- N($M_i$) décroît très rapidement vers 0 dès que la mesure de proximité devient supérieure à 1 pixel.
- N($M_i$) décroît selon une courbe ayant un point d'inflexion, au voisinage d'une mesure de proximité voisine de 2 pixels.
- N($M_i$) a une valeur quasi-nulle dès que la mesure de proximité devient supérieure à 3 pixels.

11. Procédé d'identification selon la revendication précédente, **caractérisé en ce que** la fonction d'attribution de la note de proximité au point $M_i$ s'écrit :

$$N(M_i)= \left( 0,5 - \arctan \frac{4(Dist(M_i)-2)}{\pi} \right) \frac{1}{0,9604} .$$

12. Procédé d'identification selon la revendication 10 ou 11, **caractérisé en ce qu'**il comprend une étape de mesure d'une note globale η égale à la moyenne des notes de proximité rapportées au nombre de points du contour modèle (CM).

13. Procédé d'identification selon l'une quelconque des revendications 9 à 12, **caractérisé en ce qu'**il est appliqué successivement à chacun des contours modèles d'une collection de contours modèles.

14. Procédé d'identification selon la revendication 13, **caractérisé en ce que** ladite collection est obtenue d'un autre procédé d'identification de cibles, tel un procédé utilisant une mesure de distance de Hausdorff.

15. Procédé d'identification selon la revendication 13 ou 14, **caractérisé en ce qu'**il comprend une étape de sélection d'hypothèses par comparaison à un seuil de chacune des notes globales η attribuées à chacun des contours modèles.

**16.** Procédé d'identification selon la revendication 15, **caractérisé en ce que** ledit seuil est fixé à 0,6.

**17.** Procédé d'identification selon l'une quelconque des revendications 15 ou 16, **caractérisé en ce qu'**il comprend une étape de discrimination entre des hypothèses de contours modèles qui se superposent, comprenant pour chaque paire d'une première hypothèse de contour ($CM_1$) et d'une deuxième hypothèse de contour ($CM_2$) qui se superposent, une étape de pondération de la note globale attribuée à chacun des contours modèles, la dite étape de pondération comprenant l'application du procédé de mesure de proximité selon l'une quelconque des revendications 3 à 8 :

- a en appliquant comme deuxième contour, le contour de ladite première hypothèse et comme premier contour, le contour de ladite deuxième hypothèse, ladite mesure de proximité $Dist(M1_i)$ obtenue pour chaque point ($M1_i$) de contour ($CM_1$) de la première hypothèse étant appliquée comme facteur de pondération $X(M1_i)$ de la note locale de proximité ($N(M1_i)$) de ce point au contour image (CI), et en déduire la note globale ($\eta_1$) associée à la première hypothèse de contour représentant sa proximité au contour image en calculant la moyenne desdites notes locales pondérées,
- b en appliquant comme deuxième contour, le contour de ladite deuxième hypothèse et comme premier contour, le contour de ladite première hypothèse, ladite mesure de proximité $Dist(M2_j)$ obtenue pour chaque point ($M2_j$) de contour ($CM_2$) de la première hypothèse étant appliquée comme facteur de pondération $X(M2_j)$ de la note locale de proximité ($N(M2_j)$) de ce point au contour image (CI), et en déduire la note globale ($\eta_2$) associée à la première hypothèse de contour représentant sa proximité au contour image en calculant la moyenne desdites notes locales pondérées.

**18.** Procédé d'identification selon la revendication 17, **caractérisé en ce qu'**il retient comme meilleure hypothèse de contour modèle parmi une pluralité d'hypothèses qui se superposent, celle à laquelle est associée la meilleure note globale.

**19.** Système d'identification automatique d'un objet dans une image de contours, comprenant une base de données contenant des modèles d'objets déterminés à reconnaître, et des moyens de calcul, lesdits moyens de calcul étant configurés pour comparer des contours, **caractérisé en ce que** lesdits moyens de calcul sont configurés pour effectuer les étapes d'un procédé d'identification selon l'une quelconque des revendications 9 à 18.

**Claims**

**1.** Automated method of measurement of proximity of a second contour (CM) extracted from an image to a first contour (CI), comprising for each point ($I_k$) of the first contour, a step of association with a point ($M_i$) of the second contour determined as the closest, **characterized in that** it comprises a step of pairing each point of the second contour with one or zero points of the first contour, by determining the point of the first contour which is closest from among the set of points of the first contour that are associated with said point of the second contour.

**2.** Method according to Claim 1, **characterized in that** the determination of a point that is closest to a given point is based on a true or discrete measure of the Euclidean distance between the two points.

**3.** Method according to Claim 2, **characterized in that** it comprises a step of allocating a measure of proximity Dist ($M_i$) of each point $M_i$ of the second contour (CM) to the first contour (CI), based on the measurement of the distance from this point to the point of the first contour with which it is paired.

**4.** Method according to Claim 3, **characterized in that** said distance measure is a measure corrected as a function of the difference of class of orientation of the points of the pair considered.

**5.** Method according to any one of Claims 1 to 3, **characterized in that** in the step of associating zero or one points of the second contour with each point of the first contour, the point that is closest from among the points of the second contour which have the same class of orientation as said point of the first contour is associated.

**6.** Method according to any one of Claims 1, 2, 3, or 5, **characterized in that** the associating step uses a chamfer map of the second contour via which, at each point of the first contour with coordinates x and y applied as input, said map provides as output an identification ($S_0(x,y)$) of the point of the associated second contour and a measure ($S_1(x,y)$) of the proximity between the two points thus associated.

7. Method according to Claim 6 in combination with claim 5, **characterized in that** with the second contour is associated a chamfer map per class of orientation, and **in that** for each point of the first contour, the associating step comprises a step of determining the class of the point of the first contour, so as to apply the coordinates (x,y) of this point as inputs to the chamfer map corresponding to said orientation class.

8. Method according to any one of Claims 4 to 7, **characterized in that** it uses eight orientation classes.

9. Method of automatic identification of targets in an image of extracted contours (CI) which is defined by an image contour, **characterized in that** it applies a method of measurement of proximity according to any one of Claims 1 to 8, by applying as second contour, a template contour (CM) and as first contour, said image contour (CI), so as to obtain the measure of proximity $Dist(M_i)$ of each point of said template contour to said image contour.

10. Method of identification according to Claim 9, **characterized in that** it comprises the allocation of a local score of proximity $N(M_i)$ to each point $M_i$ of the template contour as a function of the measure of proximity $Dist(M_i)$ of this point, according to the following criteria:

   - $N(M_i)$ has a value lying between 0 and 1.
   - $N(M_i) = 0$, when said point is paired with zero points of the first contour;
   - $N(M_i) = 1$, when the proximity measure is equal to zero;
   - $N(M_i)$ has a value of about 1 when the proximity measure lies between 0 and 1 pixels.
   - $N(M_i)$ decreases very rapidly to 0 as soon as the proximity measure becomes greater than 1 pixel.
   - $N(M_i)$ decreases according to a curve having a point of inflexion, in the neighborhood of a proximity measure of about 2 pixels.
   - $N(M_i)$ has a quasi-zero value as soon as the proximity measure becomes greater than 3 pixels.

11. Method of identification according to the preceding claim, **characterized in that** the function for allocating the score of proximity to the point $M_i$ may be written:

$$N(M_i) = \left( 0.5 - \arctan \frac{4(Dist(M_i) - 2)}{\pi} \right) \frac{1}{0.9604} .$$

12. Method of identification according to Claim 10 or 11, **characterized in that** it comprises a step of measuring a global score $\eta$ equal to the mean of the proximity scores relative to the number of points of the template contour (CM).

13. Method of identification according to any one of Claims 9 to 12, **characterized in that** it is applied successively to each of the template contours of a collection of template contours.

14. Method of identification according to Claim 13, **characterized in that** said collection is obtained from another method of identification of targets, such a method using a Hausdorff distance measure.

15. Method of identification according to Claim 13 or 14, **characterized in that** it comprises a step of selecting hypotheses by comparison with a threshold of each of the global scores $\eta$ allocated to each of the template contours.

16. Method of identification according to Claim 15, **characterized in that** said threshold is fixed at 0.6.

17. Method of identification according to one of Claims 15 or 16, **characterized in that** it comprises a step of discriminating between hypotheses of template contours which are superimposed, comprising for each pair of a first contour hypothesis (CM$_1$) · and of a second contour hypothesis (CM$_2$) which are superimposed, a step of weighting the global score allocated to each of the template contours, said weighting step comprising the application of the method of measurement of proximity according to any one of Claims 3 to 8:

   - a by applying as second contour, the contour of said first hypothesis and as first contour, the contour of said second hypothesis, said proximity measure $Dist(M1_i)$ obtained for each point ($M1_i$) of contour (CM$_1$) of the first hypothesis being applied as weighting factor $X(M1_i)$ for the local score of proximity ($N(M1_i)$) of this point to the image contour (CI), and by deducing the global score ($\eta_1$) associated with the first contour hypothesis representing its proximity to the image contour by calculating the mean of said weighted local scores,
   - b by applying as second contour, the contour of said second hypothesis and as first contour, the contour of said first hypothesis, said proximity measure Dist($M2_j$) obtained for each point ($M2_j$) of contour ($CM_2$) of the first hypothesis being applied as weighting factor X($M2_j$) for the local score of proximity (N($M2_j$)) of this point to the image contour (CI), and by deducing the global score ($\eta_2$) associated with the first contour hypothesis representing its proximity to the image contour by calculating the mean of said weighted local scores.

**18.** Method of identification according to Claim 17, **characterized in that** it adopts as best hypothesis of template contour, from among a plurality of hypotheses which are superimposed, that with which the best global score is associated.

**19.** System for the automatic identification of an object in an image of contours, comprising a database containing templates of determined objects to be recognized, and means of calculation, said means of calculation being configured so as to compare contours, **characterized in that** said means of calculation are configured so as to perform the steps of a method of identification, according to any one of Claims 9 to 18.

**Patentansprüche**

**1.** Automatisiertes Messverfahren der Nähe einer aus einem Bild extrahierten zweiten Kontur (CM) zu einer ersten Kontur (CI), das für jeden Punkt ($I_k$) der ersten Kontur einen Schritt der Zuordnung zu einem Punkt ($M_i$) der zweiten Kontur aufweist, der als der nächstliegende bestimmt wird, **dadurch gekennzeichnet, dass** es einen Schritt der Paarbildung jedes Punkts der zweiten Kontur mit einem Punkt oder Null Punkt der ersten Kontur durch Bestimmung des nächstliegenden Punkts der ersten Kontur aus der Gesamtheit der dem Punkt der zweiten Kontur zugeordneten Punkte der ersten Kontur aufweist.

**2.** Verfahren nach Anspruch 1, **dadurch gekennzeichnet, dass** die Bestimmung eines Punkts, der einem gegebenen Punkt am nächsten liegt, auf einer echten oder diskreten Messung des euklidischen Abstands zwischen den beiden Punkten beruht.

**3.** Verfahren nach Anspruch 2, **dadurch gekennzeichnet, dass** es einen Schritt der Zuweisung einer Näherungsmessung Dist($M_i$) jedes Punkts $M_i$ der zweiten Kontur (CM) zur ersten Kontur (CI) aufweist, der auf der Messung des Abstands dieses Punkts von dem Punkt der ersten Kontur beruht, mit dem er gepaart ist.

**4.** Verfahren nach Anspruch 3, **dadurch gekennzeichnet, dass** die Abstandsmessung eine korrigierte Messung in Abhängigkeit von der Differenz der Ausrichtungsklasse der Punkte des betrachteten Paars ist.

**5.** Verfahren nach einem der Ansprüche 1 bis 3, **dadurch gekennzeichnet, dass** im Schritt der Zuordnung zu jedem Punkt der ersten Kontur von Null oder einem Punkt der zweiten Kontur der am nächsten liegende Punkt unter den Punkten der zweiten Kontur zugeordnet wird, die die gleiche Ausrichtungsklasse wie der Punkt der ersten Kontur haben.

**6.** Verfahren nach einem der Ansprüche 1, 2, 3 oder 5, **dadurch gekennzeichnet, dass** der Zuordnungsschritt eine Abschrägungskarte der zweiten Kontur verwendet, durch die an jedem Punkt der ersten Kontur mit den Koordinaten x und y, die am Eingang angelegt werden, die Karte am Ausgang eine Identifizierung ($S_0(x,y)$) des zugeordneten Punkts der zweiten Kontur und eine Messung ($S_1(x,y)$) des Abstands zwischen den beiden so zugeordneten Punkten liefert.

**7.** Verfahren nach Anspruch 6 in Verbindung mit Anspruch 5, **dadurch gekennzeichnet, dass** der zweiten Kontur eine Abschrägungskarte pro Ausrichtungsklasse zugeordnet ist, und dass für jeden Punkt der ersten Kontur der Zuordnungsschritt einen Schritt der Bestimmung der Klasse des Punkts der ersten Kontur aufweist, um die Koordinaten (x,y) dieses Punkts an den Eingang der Abschrägungskarte anzulegen, die dieser Ausrichtungsklasse entspricht.

**8.** Verfahren nach einem der Ansprüche 4 bis 7, **dadurch gekennzeichnet, dass** es acht Ausrichtungsklassen verwendet.

**9.** Verfahren zur automatischen Identifizierung von Zielen in einem Bild von extrahierten Konturen (CI), das von einer Bildkontur definiert wird, **dadurch gekennzeichnet, dass** es ein Verfahren der Näherungsmessung nach einem der Ansprüche 1 bis 8 anwendet, indem es als zweite Kontur eine Modellkontur (CM) und als erste Kontur die Bildkontur (CI) anwendet, um die Näherungsmessung Dist($M_i$) jedes Punkts der Modellkontur zur Bildkontur zu erhalten.

**10.** Identifizierungsverfahren nach Anspruch 9, **dadurch gekennzeichnet, dass** es die Zuweisung einer lokalen Näherungs-Note (N($M_i$) zu jedem Punkt $M_i$ der Modellkontur in Abhängigkeit von der Näherungsmessung Dist ($M_i$) dieses Punkts gemäß den folgenden Kriterien aufweist:

- N($M_i$) hat einen Wert zwischen 0 und 1,
- N($M_i$) = 0, wenn der Punkt mit Null Punkt der ersten Kontur gepaart ist;
- N($M_i$) = 1, wenn das Näherungsmaß gleich Null ist;
- N($M_i$) hat einen Wert nahe 1, wenn das Näherungsmaß zwischen 0 und 1 Pixel liegt;
- N($M_i$) nimmt sehr schnell gegen 0 ab, sobald das Näherungsmaß größer wird als 1 Pixel;
- N($M_i$) nimmt gemäß einer Kurve ab, die einen Wendepunkt in der Nähe eines Näherungsmaßes nahe 2 Pixel aufweist;
- N($M_i$) hat einen Wert praktisch gleich Null, sobald das Näherungsmaß größer wird als 3 Pixel.

**11.** Identifizierungsverfahren, nach dem vorhergehenden Anspruch, **dadurch gekennzeichnet, dass** die Funktion der Zuweisung der Näherungs-Note zum Punkt $M_i$ folgendermaßen ausgedrückt wird:

$$N(M_i) = \left( 0{,}5 - \arctan \frac{4\big(\text{Dist}(M_i) - 2\big)}{\pi} \right) \cdot \frac{1}{0{,}9604} \, .$$

**12.** Identifizierungsverfahren nach Anspruch 10 oder 11, **dadurch gekennzeichnet, dass** es einen Schritt der Messung einer globalen Note $\eta$ gleich dem Mittelwert der Näherungs-Noten, bezogen auf die Anzahl von Punkten der Modellkontur (CM), aufweist.

**13.** Identifizierungsverfahren nach einem der Ansprüche 9 bis 12, **dadurch gekennzeichnet, dass** es nacheinander auf jede der Modellkonturen einer Kollektion von Modellkonturen angewendet wird.

**14.** Identifizierungsverfahren nach Anspruch 13, **dadurch gekennzeichnet, dass** die Kollektion von einem anderen Verfahren der Identifizierung von Zielen erhalten wird, z.B. einem Verfahren, das eine Hausdorff-Abstandsmessung verwendet.

**15.** Identifizierungsverfahren nach Anspruch 13 oder 14, **dadurch gekennzeichnet, dass** es einen Schritt der Auswahl von Hypothesen durch Vergleich mit einem Schwellwert jeder der globalen Noten $\eta$ aufweist, die jeder der Modellkonturen zugewiesen sind.

**16.** Identifizierungsverfahren nach Anspruch 15, **dadurch gekennzeichnet, dass** der Schwellwert auf 0,6 festgelegt ist.

**17.** Identifizierungsverfahren nach einem der Ansprüche 15 oder 16, **dadurch gekennzeichnet, dass** es einen Schritt der Unterscheidung zwischen Hypothesen von Modellkonturen aufweist, die sich überlagern, mit für jedes Paar einer ersten Kontur-Hypothese ($CM_1$) und einer zweiten Kontur-Hypothese ($CM_2$), die sich überlagern, mit einem Schritt der Gewichtung der globalen Note, die jeder der Modellkonturen zugewiesen ist, wobei der Gewichtungsschritt die Anwendung des Verfahrens zur Näherungsmessung nach einem der Ansprüche 3 bis 8 aufweist:

- a indem als zweite Kontur die Kontur der ersten Hypothese und als erste Kontur die Kontur der zweiten Hypothese angewendet wird, wobei die Näherungsmessung Dist($M1_i$), die für jeden Punkt ($M1_i$) der Kontur ($CM_1$) der ersten Hypothese erhalten wird, als Gewichtungsfaktor X($M1_i$) der lokalen Näherungs-Note (N($M1_i$)) dieses Punkts an die Bildkontur (CI) angewendet wird, und daraus die der ersten Kontur-Hypothese zugeordnete globale Note ($\eta_1$) abgeleitet wird, die ihren Abstand zur Bildkontur darstellt, indem der Mittelwert der gewichteten lokalen Noten berechnet wird,
- b indem als zweite Kontur die Kontur der zweiten Hypothese und als erste Kontur die Kontur der ersten Hypothese angewendet wird, wobei die Näherungsmessung Dist($M2_j$), die für jeden Punkt ($M2_j$) der Kontur ($CM_2$) der ersten Hypothese erhalten wird, als Gewichtungsfaktor X($M2_j$) der lokalen Näherungs-Note (N($M2_j$)) dieses Punkts an die Bild-Kontur (CI) angewendet wird, und daraus die der ersten Kontur-Hypothese zugeord-

nete globale Note ($\eta_2$) abgeleitet wird, die ihren Abstands zur Bildkontur darstellt, indem der Mittelwert der gewichteten lokalen Noten berechnet wird.

18. Identifizierungsverfahren nach Anspruch 17, **dadurch gekennzeichnet, dass** es als beste Modellkontur-Hypothese unter mehreren sich überlagernden Hypothesen diejenige nimmt, der die beste globale Note zugeordnet ist.

19. System zur automatischen Identifizierung eines Gegenstands in einem Bild von Konturen, mit einer Datenbasis, die Modelle von bestimmten zu erkennenden Gegenständen enthält, und mit Rechenmitteln, wobei die Rechenmittel konfiguriert sind, um Konturen zu vergleichen, **dadurch gekennzeichnet, dass** die Rechenmittel konfiguriert sind, um die Schritte eines Identifizierungsverfahrens nach einem der Ansprüche 9 bis 18 durchzuführen.

# FIG.1

# FIG.2

FIG.3

FIG.4a

FIG.4b

FIG.5a

FIG.5b

FIG.6

N(M_i)

Valeur de la note

Distance entre les 2 points de contours

CM$_1$

FIG.7a

CM$_2$

FIG.7b

M1$_b$

M1$_a$

d$_a$

FIG.7c

CM$_1$

CM$_2$

CI

FIG.7d